# EUROPÄISCHE PATENTANMELDUNG

(11) **EP 4 717 951 A1**
(43) Veröffentlichungstag der Anmeldung: **01.04.2026**
(21) Anmeldenummer: 25203992.0
(22) Anmeldetag: 23.09.2025
(51) Int. Cl.: F16K 11/085, F16K 5/04, F16K 27/06

(54) **ROTATIONSVENTIL**

(30) Priorität: 25.09.2024 DE 202024105522 U
(71) Anmelder: TI Automotive Technology Center GmbH, 76437 Rastatt (DE)
(72) Erfinder: Wu, Chaoxiong, Wuhan City, Hubei Province (CN); Qi, Liu, Suzhou, Jiangsu (CN); Tuzin, Artem, Stutensee (DE); Deibel, Florian, Sinzheim (DE)
(74) Vertreter: Reiser & Partner Patentanwälte mbB

(57) **Zusammenfassung**

Rotationsventil (1), umfassend ein mit Strömungskanälen (2) versehenes Ventilgehäuse (3), in welchem ein Ventilkern (4) drehbar gelagert ist, wobei der Ventilkern (4) mit einer Kanalstruktur (5) versehen ist und wobei das Ventilgehäuse (3) eine Kammerwand (6) aufweist, in die die Strömungskanäle (2) münden, wobei dem Ventilkern (4) ein Dichtelement (7) zugeordnet ist, welches den Spalt zwischen Kammerwand (6) und Ventilkern (4) abdichtet, wobei die Kanalstruktur (5) einen Einlaufkanal (8) aufweist.

## Beschreibung

Die Erfindung betrifft ein Rotationsventil, umfassend ein Ventilgehäuse, in welchem ein Ventilkern drehbar gelagert ist, wobei der Ventilkern mit einer Kanalstruktur versehen ist und wobei das Ventilgehäuse eine Kammerwand aufweist, in die die Strömungskanäle münden, wobei dem Ventilkern ein Dichtelement zugeordnet ist, welches den Spalt zwischen Kammerwand und Ventilkern abdichtet.

Ein derartiges Ventil ist aus der CN 117108791 A bekannt. Das dort beschriebene Ventil ist als Rotationsventil ausgebildet und kommt in Kühlkreisläufen zur Steuerung des Kühlmittelstroms zum Einsatz. Durch die in das Ventilgehäuse mündenden Fluidöffnungen kann ein Kühlfluid in das Ventil ein- und ausströmen. Die in den Ventilkern eingebrachte Kanalstruktur steuert dabei den Kühlmittelstrom, wobei je nach Ausgestaltung und Anzahl der Fluidkanäle unterschiedliche Kühlkreisläufe angesteuert, der Volumenstrom des Kühlmittels reguliert und/oder die Durchflussrichtung des Kühlmittels angepasst werden können.

Bei einem Rotationsventil erfolgt eine Anpassung des Kühlmittelstroms durch Drehen des Ventilkerns, wobei der entsprechende Aktor zum Drehen des Ventilkerns einfach ausgebildet und einfach ansteuerbar ist. Demensprechend sind Rotationsventile und die dazugehörigen Aktoren kostengünstig herstellbar und benötigen nur wenig Bauraum.

Rotationsventile sind demensprechend insbesondere vorteilhaft in Bezug auf den Einsatz in Temperierkreisläufen im Bereich der Elektromobilität. Zu temperierende Komponenten von Elektrofahrzeugen sind dabei insbesondere elektrische Energiespeicher, die Leistungselektronik oder Steckverbindungen von Schnellladeeinrichtungen. Das durch den Temperierkreislauf strömende Temperiermedium kann je nach Anforderung in einer Heizeinrichtung erwärmt oder in einer Kühleinrichtung abgekühlt werden. Die Steuerung des Temperiermediums erfolgt über ein oder mehrere Rotationsventile.

Zur Vermeidung interner Leckagen ist im Bereich des Übergangs zwischen Fluidkanal und Ventilkern ein Dichtkörper angeordnet. Dabei besteht das Problem, dass der Dichtkörper je nach Ausgestaltung hohe Reibkräfte verursachen kann, was sich negativ auf den Verschleiß und die erforderliche Stellkraft des Aktors auswirkt.

Der Erfindung liegt die Aufgabe zugrunde, ein Ventil bereitzustellen, welches kostengünstig herstellbar ist und eine lange Gebrauchsdauer aufweist.

Diese Aufgabe wird mit den Merkmalen von Anspruch 1 gelöst. Auf vorteilhafte Ausgestaltungen nehmen die Unteransprüche Bezug.

Das erfindungsgemäße Rotationsventil umfasst ein Ventilgehäuse, in welchem ein Ventilkern drehbar gelagert ist, wobei der Ventilkern mit einer Kanalstruktur versehen ist und wobei das Ventilgehäuse eine Kammerwand aufweist, in die die Strömungskanäle münden, wobei dem Ventilkern ein Dichtelement zugeordnet ist, welches den Spalt zwischen Kammerwand und Ventilkern abdichtet, wobei die Kanalstruktur einen Einlaufkanal aufweist.

Das Rotationsventil ist einfach und kostengünstig ausgebildet, insbesondere indem dem Ventilkern lediglich ein einziges Dichtelement zugeordnet ist. Das Dichtelement ist vorzugsweise formschlüssig an dem Ventilkern befestigt. Dies ermöglicht eine schnelle und einfache Montage. Alternativ ist aber auch denkbar, dass das Dichtelement stoffschlüssig oder form- und stoffschlüssig an dem Ventilkern festgelegt ist.

Vorzugsweise weist das Dichtelement einen einstückig ausgeformten Dichtkörper auf. Insbesondere ist das Dichtelement dabei aus lediglich einem einzigen Werkstoff ausgebildet und dadurch besonders einfach und kostengünstig herstellbar.

Vorzugsweise besteht der Dichtkörper aus einem Fluor-Silikon-Kautschuk (FVMQ). Fluor-Silikon-Kautschuke sind resistent gegenüber Alkoholgemischen und dadurch insbesondere für den Transport von alkoholhaltiger Kühlflüssigkeit geeignet.

Das Dichtelement kann als Käfig ausgebildet sein. Bei dieser Ausgestaltung umfasst das Dichtelement mehrere linienförmige Elemente, die die Kanalstruktur des Ventilkerns begrenzen. Dabei sind aus dem Dichtelement vorzugsweise Dichtrippen ausgebildet, die sich in Längsrichtung des Ventilkerns erstrecken und in Richtung der Kammerwand weisen. Durch die Ausgestaltung der Dichtrippen ergibt sich eine linienförmige Anlage des Dichtelementes an der Kammerwand des Ventilgehäuses und damit einhergehend eine hohe Dichtwirkung.

Durch die käfigartige Ausgestaltung des Dichtelementes ist es möglich, das Dichtelement einstückig auszubilden und dadurch kostengünstig herzustellen.

Vorzugsweise begrenzt das Dichtelement die Kanalstruktur, indem die Dichtrippen des Dichtelementes um die Öffnungen der Kanalstruktur herumgeführt sind.

Der Einlaufkanal kann trapezoid geformt sein. Bei dieser Ausgestaltung erweitert sich der Einlaufkanal in Richtung auf die Kammerwand, sodass ein Einströmen in den Einlaufkanal über einen großen Winkelbereich des Ventilkerns möglich ist. Dadurch können mehr Ventilstellungen angesteuert werden. Vorzugsweise erweitert sich der Querschnitt des Einlaufkanals dabei in Richtung auf die Kammerwand.

Der Ventilkern ist vorzugsweise mit einem Aktor verbunden. Der Aktor kann dabei einen Elektromotor umfassen, der den Ventilkern innerhalb des Ventilgehäuses verdreht.

Zwischen dem Ventilkern und dem Aktor kann ein Ventildeckel angeordnet sein, wobei der Ventilkern, der Ventildeckel und der Aktor eine vormontierte Einheit bilden. Diese Ausgestaltung ermöglicht eine schnelle und kostengünstige Montage von Ventilkern, Aktor und Ventildeckel.

Das Ventilgehäuse kann ein Oberteil und ein Unterteil umfassen, wobei die Strömungskanäle in dem Oberteil ausgeformt sind. Vorzugsweise ist das Ventilgehäuse aus Kunststoff ausgebildet und insbesondere das Oberteil kann als Spritzgießteil ausgebildet sein. Das Unterteil kann flächig ausgebildet sein, wobei gemäß einer vorteilhaften Ausgestaltung in dem Unterteil ein weiterer Strömungskanal ausgeformt ist, der mit einem in der Längsachse des Ventilkerns angeordneten Kanal zusammenwirkt.

Einige Ausgestaltungen des erfindungsgemäßen Rotationsventils werden nachfolgend anhand der Figuren näher erläutert. Diese zeigen, jeweils schematisch:
Fig. 1 ein Rotationsventil;
Fig. 2 den Ventilkern, den Ventildeckel und den Aktor als vormontierte Einheit;
Fig. 3 das Ventilgehäuse;
Fig. 4 das Ventilgehäuse mit Oberteil und Unterteil;
Fig. 5 den Ventilkern im Schnitt;
Fig. 6 den Ventilkern mit Dichtelement;
Fig. 7 das Dichtelement.

Die Figuren zeigen ein Rotationsventil 1, umfassend ein mit Strömungskanälen 2 versehenes Ventilgehäuse 3, in welchem ein Ventilkern 4 drehbar gelagert ist. Das Rotationsventil 1 ist Bestandteil einer Rohranordnung und kommt in einem Kühlkreislauf zur Steuerung des Kühlmittelstroms zum Einsatz. Durch die in das Ventilgehäuse 3 eingebrachten Strömungskanäle 2 kann ein Kühlfluid in das Rotationsventil 1 ein- und ausströmen. Die in den Ventilkern 4 eingebrachte Kanalstruktur 5 steuert den Kühlmittelstrom, wobei unterschiedliche Kühlkreisläufe angesteuert, der Volumenstrom des Kühlmittels reguliert und die Durchflussrichtung des Kühlmittels angepasst werden kann.

Die Anpassung des Kühlmittelstroms erfolgt durch Drehen des Ventilkerns 4, wobei das zum Drehen erforderliche Drehmoment durch einen auf den Ventilkern 4 aufgesetzten Aktor 11 bereitgestellt wird.

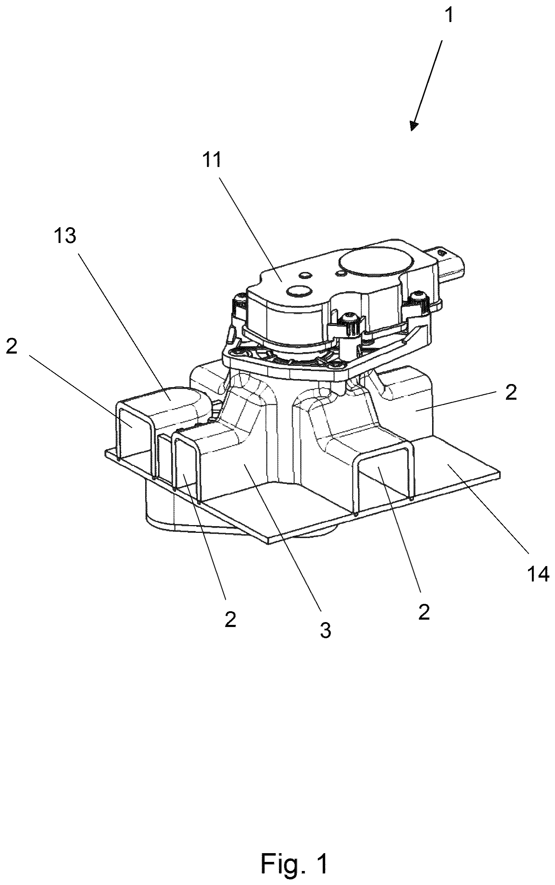

**Fig. 1** zeigt eine Gesamtansicht des Rotationsventils 1. Zu erkennen sind das Ventilgehäuse 3 und der Aktor 11. Das Ventilgehäuse 3 umfasst ein Oberteil 13 und ein Unterteil 14, wobei die Strömungskanäle 2 in dem Oberteil 13 ausgeformt und durch das Unterteil 14 unterseitig abgedeckt sind. Das Oberteil 13 und das Unterteil 14 des Ventilgehäuses 3 sind aus Kunststoff ausgebildet und im Spritzgießverfahren hergestellt.

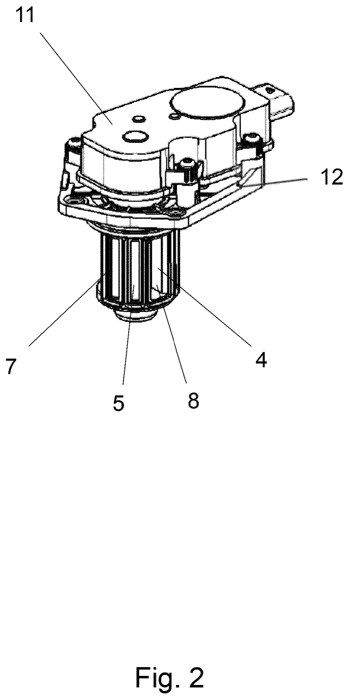

**Fig. 2** zeigt den Ventilkern 4, welcher mit einem Ventildeckel 12 und dem Aktor 11 eine vormontierte Einheit bildet.

Der Ventilkern 4 ist im Wesentlichen zylindrisch ausgebildet und über eine in der Längsachse angeordnete Antriebswelle 21 mit dem Aktor 11 drehfest verbunden. Zwischen dem Ventilkern 4 und dem Aktor 11 ist ein Ventildeckel 12 angeordnet, wobei der Aktor 11 wiederum drehfest mit dem Ventildeckel 12 verbunden ist. Zur Montage des Rotationsventils 1 wird die vormontierte Einheit aus Ventilkern 4, Aktor 11 und Ventildeckel 12 in das Ventilgehäuse 3 eingesteckt und das Ventilgehäuse 3 wird mit dem Ventildeckel 12 über eine Schraubverbindung fest verbunden, wobei auch alternative Verbindungsarten, wie eine Klebeverbindung, denkbar sind.

Die Antriebswelle 21 des Ventilkerns 4 ragt durch eine in den Ventildeckel 12 eingebrachte Durchbrechung hindurch, wobei der Spalt zwischen Ventildeckel 12 und Antriebswelle 21 durch eine Dichtung verschlossen ist. Der Aktor 11 umfasst einen Elektromotor und ein Getriebe, über die das Drehmoment zum Verdrehen des Ventilkerns 4 aufgebracht wird.

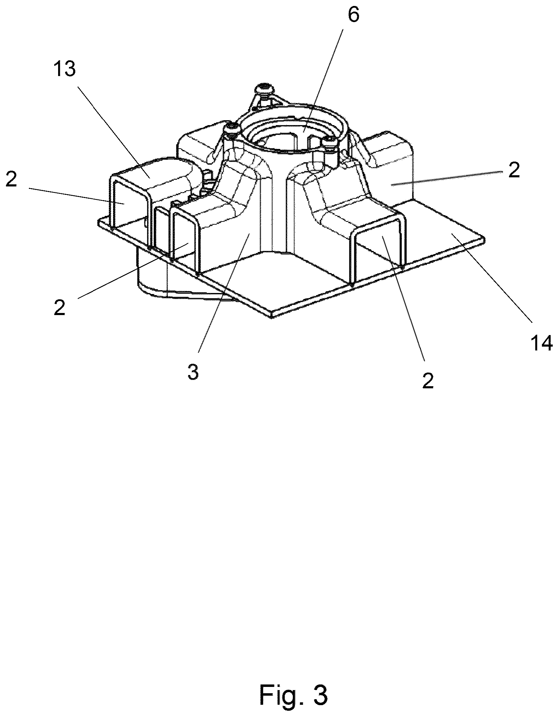

**Fig. 3** zeigt das Ventilgehäuse 3 des Rotationsventils 1, bestehend aus dem Oberteil 13 und dem Unterteil 14. Die Strömungskanäle 2 sind in dem Oberteil 13 ausgeformt und unterseitig durch das Unterteil 14 abgedeckt.

Das Ventilgehäuse 3 begrenzt einen Raum, in welchem der Ventilkern 4 aufgenommen werden kann. Dabei weist das Ventilgehäuse 3 eine Kammerwand 6 auf, in die die Strömungskanäle 2 münden. Je nach Stellung des Ventilkerns 4 bewirkt die in den Ventilkern 4 eingebrachte Kanalstruktur 5 eine Überdeckung mit den Strömungskanälen 2, sodass je nach Stellung des Ventilkerns 4 Kühlmedien unterschiedlich durch die Strömungskanäle 2 geleitet werden können.

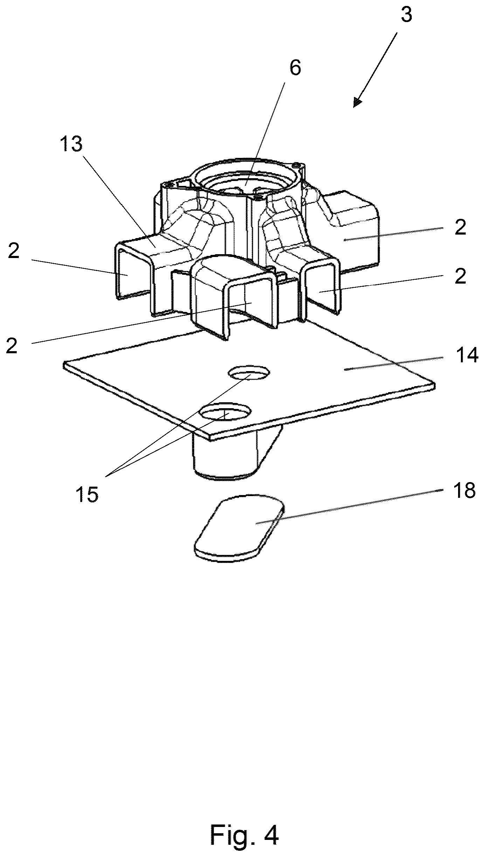

**Fig. 4** zeigt eine Explosionsdarstellung des in **Fig. 3** gezeigten Ventilgehäuses 3. Zu erkennen ist, dass in dem Unterteil 14 ein weiterer Strömungskanal 15 ausgeformt ist, der mit einem in der Längsachse 16 des Ventilkerns 4 angeordneten Kanal 17 zusammenwirkt. Der weitere Strömungskanal 15 ist unterseitig durch einen Kanaldeckel 18 verschlossen. Diese Ausgestaltung ermöglicht eine besonders kostengünstige Herstellung des Unterteils 14, bzw. des Ventilgehäuses 3. Das Unterteil 14 ist ebenso wie das Oberteil 13 aus Kunststoff ausgebildet und im Spritzgießverfahren hergestellt.

Das Oberteil 13 und das Unterteil 14 sind stoffschlüssig, beispielsweise durch Ultraschallschweißen, miteinander verbunden. Denkbar ist dabei ebenso, dass das Oberteil 13 und das Unterteil 14 formschlüssig, beispielsweise über eine Klipsverbindung, miteinander verbunden sind. Zwischen dem Oberteil 13 und dem Unterteil 14 sind im Fall einer formschlüssigen Verbindung vorzugsweise Dichtelemente zur Abdichtung des Spaltes in dem Oberteil 13 und dem Unterteil 14 vorgesehen.

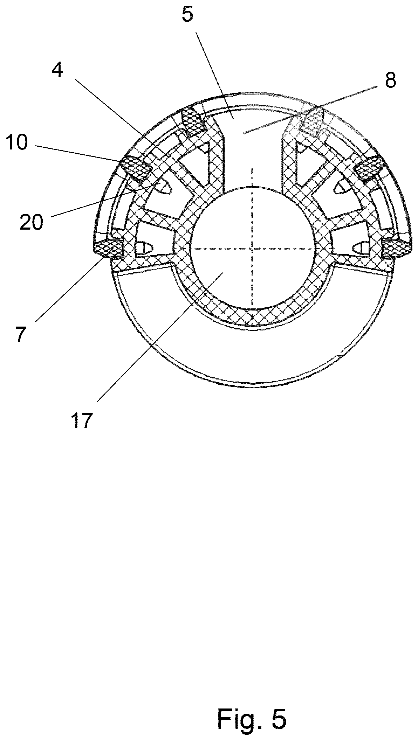

**Fig. 5** zeigt den Ventilkern 4 im Querschnitt. In dieser Figur ist zu erkennen, dass die Kanalstruktur 5 einen Einlaufkanal 8 aufweist, wobei der Einlaufkanal 8 trapezoid geformt ist. Der Einlaufkanal 8 ist strömungsleitend mit dem in der Längsachse 16 des Ventilkerns 4 angeordneten Kanal 17 verbunden.

Dem Ventilkern 4 ist ein Dichtelement 7 zugeordnet, welches den Spalt zwischen Kammerwand 6 und Ventilkern 4 abdichtet. Das Dichtelement weist einen einstückig ausgeformten Dichtkörper 9 aus Fluor-Silikon-Kautschuk (FVMQ) auf. Das Dichtelement 7 ist als Käfig ausgebildet und begrenzt die Kanalstruktur 5, indem die Stege des Dichtelementes 7 entlang der Kanten der Kanalstruktur 5 angeordnet sind.

Aus dem Dichtelement 7 sind Dichtrippen 10 ausgebildet, die sich in Längsrichtung des Ventilkerns 4 erstrecken und in Richtung der Kammerwand 6 weisen.

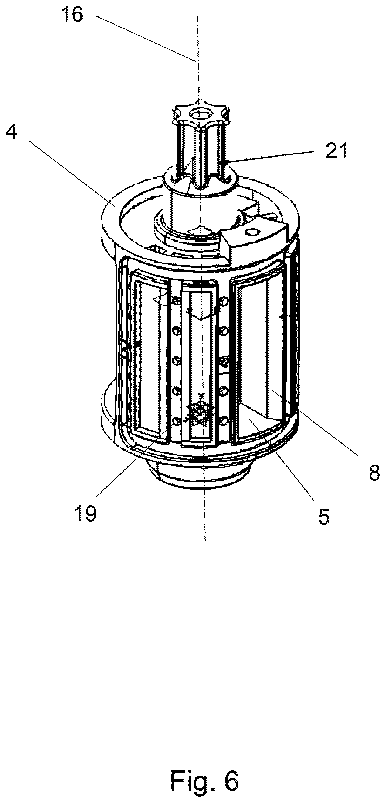

**Fig. 6** zeigt im Detail den Ventilkern 4 ohne Dichtelement 7. Zur Aufnahme des Dichtelementes 7 sind in dem Ventilkern 4 Vertiefungen 19 eingebracht, die der formschlüssigen Aufnahme des Dichtelementes 7 dienen. Die Vertiefungen 19 bilden für die formschlüssige Aufnahme einen Hinterschnitt aus.

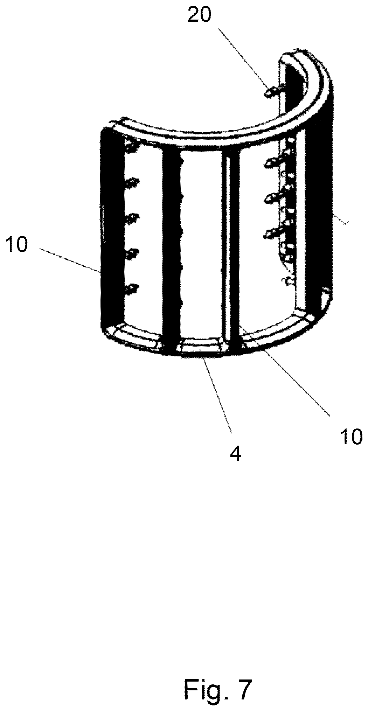

**Fig. 7** zeigt schließlich das Dichtelement 7. Zu erkennen sind die Dichtrippen 10, die sich in Längsrichtung des Ventilkerns 4 erstrecken und in Richtung der Kammerwand 6 weisen. Ferner sind Vorsprünge 20 zu erkennen, die pilzkopfförmig ausgebildet sind und die zur formschlüssigen Verbindung des Dichtelementes 7 mit dem Ventilkern 4 in die entsprechenden Vertiefungen 19 des Ventilkerns 4 eingesteckt werden. Dadurch ist der Ventilkern 4 mit dem Dichtelement 7 schnell und kostengünstig herstellbar.

## Patentansprüche

1. Rotationsventil (1), umfassend ein mit Strömungskanälen (2) versehenes Ventilgehäuse (3), in welchem ein Ventilkern (4) drehbar gelagert ist, wobei der Ventilkern (4) mit einer Kanalstruktur (5) versehen ist und wobei das Ventilgehäuse (3) eine Kammerwand (6) aufweist, in die die Strömungskanäle (2) münden, wobei dem Ventilkern (4) ein Dichtelement (7) zugeordnet ist, welches den Spalt zwischen Kammerwand (6) und Ventilkern (4) abdichtet, wobei die Kanalstruktur (5) einen Einlaufkanal (8) aufweist.

2. Rotationsventil nach Anspruch 1, **dadurch gekennzeichnet, dass** das Dichtelement (7) einen einstückig ausgeformten Dichtkörper (9) aufweist.

3. Rotationsventil nach Anspruch 1 oder 2, **dadurch gekennzeichnet, dass** der Dichtkörper (9) aus einem Fluor-Silikon-Kautschuk ausgebildet ist.

4. Rotationsventil nach einem der Ansprüche 1 bis 3, **dadurch gekennzeichnet, dass** das Dichtelement (7) als Käfig ausgebildet ist.

5. Rotationsventil nach einem der Ansprüche 1 bis 4, **dadurch gekennzeichnet, dass** aus dem Dichtelement (7) Dichtrippen (10) ausgebildet sind, die sich in Längsrichtung des Ventilkerns (4) erstrecken und in Richtung der Kammerwand (6) weisen.

6. Rotationsventil nach einem der Ansprüche 1 bis 5, **dadurch gekennzeichnet, dass** das Dichtelement (7) formschlüssig an dem Ventilkern (4) festgelegt ist.

7. Rotationsventil nach einem der Ansprüche 1 bis 6, **dadurch gekennzeichnet, dass** das Dichtelement (7) die Kanalstruktur (5) begrenzt.

8. Rotationsventil nach einem der Ansprüche 1 bis 7, **dadurch gekennzeichnet, dass** der Einlaufkanal (8) trapezoid geformt ist.

9. Rotationsventil nach einem der Ansprüche 1 bis 8, **dadurch gekennzeichnet, dass** sich der Querschnitt des Einlaufkanals (8) in Richtung auf die Kammerwand (6) erweitert.

10. Rotationsventil nach einem der Ansprüche 1 bis 9, **dadurch gekennzeichnet, dass** der Ventilkern (4) mit einem Aktor (11) verbunden ist.

11. Rotationsventil nach Anspruch 10, **dadurch gekennzeichnet, dass** zwischen dem Ventilkern (4) und dem Aktor (11) ein Ventildeckel (12) angeordnet ist, wobei der Ventilkern (4), der Ventildeckel (12) und der Aktor (11) eine vormontierte Einheit bilden.

12. Rotationsventil nach einem der Ansprüche 1 bis 11, **dadurch gekennzeichnet, dass** das Ventilgehäuse (3) ein Oberteil (13) und ein Unterteil (14) umfasst, wobei die Strömungskanäle (2) in dem Oberteil (13) ausgeformt sind.

13. Rotationsventil nach Anspruch 12, **dadurch gekennzeichnet, dass** in dem Unterteil (14) ein weiterer Strömungskanal (15) ausgeformt ist, der mit einem in der Längsachse (16) des Ventilkerns (4) angeordneten Kanal (17) zusammenwirkt.
